# EUROPEAN PATENT APPLICATION

(11) **EP 4 428 103 A1**
(43) Date of publication of application: **11.09.2024**
(21) Application number: 24154691.0
(22) Date of filing: 30.01.2024
(51) Int. Cl.: C01G 53/00, H01M 4/131

(54) **MANUFACTURING METHOD FOR PRECURSOR PARTICLES OF LITHIUM TRANSITION METAL COMPOSITE OXIDE, MANUFACTURING METHOD FOR LITHIUM TRANSITION METAL COMPOSITE OXIDE, AND MANUFACTURING METHOD FOR LITHIUM ION SECONDARY BATTERY**

(30) Priority: 10.03.2023 JP 2023037019
(71) Applicant: Prime Planet Energy & Solutions, Inc., Chuo-ku Tokyo 103-0022 (JP)
(72) Inventor: YAMAMOTO, Yuji, Tokyo, 103-0022 (JP)
(74) Representative: Kuhnen & Wacker Patent- und Rechtsanwaltsbüro PartG mbB

(57) **Abstract**

A manufacturing method disclosed herein includes: an initial solution preparation step (S 1) of preparing an initial solution containing at least water; and a crystallization step (S2) of preparing a reaction solution by adding, to the initial solution, a water-soluble salt of lithium, a water-soluble salt of a transition metal, an ammonium ion donor, and a strongly basic compound, and precipitating the precursor particles in the reaction solution.

## Description

### BACKGROUND OF THE DISCLOSURE

### 1. Field

The present disclosure relates to a manufacturing method for precursor particles of a lithium transition metal composite oxide, a manufacturing method for a lithium transition metal composite oxide, and a manufacturing method for a lithium ion secondary battery. 2. Background

Lithium ion secondary batteries that use lithium transition metal composite oxides as the positive electrode active material are conventionally known. The prior art technical references regarding a manufacturing method for a lithium transition metal composite oxide include, for example, Japanese Patent Application Publication No. 2021-136096, Japanese Patent Application Publication No. 2015-026559, Japanese Patent Application Publication No. 2015-002120, Japanese Patent Application Publication No. 2013-171744, and Japanese Patent Application Publication No. 2017-228535. For example, Japanese Patent Application Publication No. 2021-136096 discloses a manufacturing method for a lithium transition metal composite oxide designed for a lithium ion secondary battery, the method including a crystallization step of utilizing a crystallization reaction to obtain a carbonate composite (precursor) containing a transition metal but not lithium; and a firing step of mixing this carbonate composite with a lithium source and firing them.

### SUMMARY

As lithium ion secondary batteries are being used more widely, there is a growing demand for even higher capacity. The present disclosure has been made in view of the above circumference and has a main object to provide a manufacturing method for precursor particles that are convertible to a lithium transition metal composite oxide by firing and can realize a lithium ion secondary battery with high capacity.

The present disclosure provides a manufacturing method for precursor particles that contain a lithium element and a transition metal element and are convertible to a lithium transition metal composite oxide by firing. This manufacturing method includes: an initial solution preparation step of preparing an initial solution containing at least water; and a crystallization step of preparing a reaction solution by adding, to the initial solution, a water-soluble salt of lithium, a water-soluble salt of a transition metal, an ammonium ion donor, and a strongly basic compound, and precipitating the precursor particles containing the lithium and the transition metal in the reaction solution.

A lithium ion secondary battery with high capacity can be suitably realized by using, as the positive electrode active material, a fired material of the precursor particles manufactured by such a method.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a flowchart for explaining a manufacturing method for precursor particles according to one embodiment of the present disclosure.
FIG. 2 is a cross-sectional view schematically illustrating a structure of a lithium ion secondary battery that uses a fired product of the precursor particles according to the embodiment.
FIG. 3 is a schematic exploded view illustrating a structure of a wound electrode body of the lithium ion secondary battery illustrated in FIG. 2.

### DETAILED DESCRIPTION OF THE PREFERRED EMBODIMENTS

Preferred embodiments of the present disclosure will be described below with reference to the drawings as appropriate. Matters other than those particularly mentioned in the present specification and necessary for the implementation of the present disclosure (for example, the general structure and manufacturing process of a lithium ion secondary battery that do not characterize the present disclosure) can be grasped as design matters of those skilled in the art based on the prior art in the relevant field. The present disclosure can be implemented on the basis of the contents disclosed in the present specification and common technical knowledge in the relevant field. In the figures below, members and portions having the same action are labeled with the same reference signs, and a duplicate description may be omitted or simplified.

It is noted that the term "lithium ion secondary battery" in the present specification refers to a general secondary battery that can be charged and discharged by transfer of charges with lithium ions between positive and negative electrodes by using the lithium ions as charge carriers, and it is a term that also encompasses a lithium ion capacitor and the like.

### [Precursor particles]

First, precursor particles obtained by the manufacturing method disclosed herein will be described. The precursor particles according to this embodiment are particles convertible to a lithium transition metal composite oxide by firing. The precursor particles are converted into lithium transition metal composite oxide by firing and thus can be used as the positive electrode active material in lithium ion secondary batteries. Therefore, the precursor particles can also be regarded as lithium-containing precursor particles that are used for the positive electrode active material in lithium ion secondary batteries. The precursor particles are preferably particles that are convertible by firing to a lithium transition metal composite oxide having a layered rock-salt crystal structure. The crystal structure of the precursor particles can be confirmed by conventionally known methods (e.g., X-ray diffraction (XRD)).

The precursor particles are made of a particulate compound that is converted to a lithium transition metal composite oxide. Examples of the compound of the precursor particle include carbonate, hydroxide, sulfate, nitrate, and oxalate. Among them, the precursor particles are preferably made of carbonate.

Each of the precursor particles contains a lithium element (Li element) and a transition metal element (TM element). Therefore, the precursor particles disclosed herein are different from a mixture of first particles containing the Li element and not containing the TM element, and second particles containing the TM element and not containing the Li element. The TM element is not particularly limited and is at least one element selected of Zr, Mo, Co, Fe, Ni, Mn, Cu, Cr, V, Nb, Pt, Pd, Ru, Rh, Au, Ag, Ti, Nb, and W, for example. The TM element preferably contains at least one element selected from the group consisting of Ni, Co, and Mn, and more preferably contains all of Ni, Co, and Mn. Thus, the battery characteristics (e.g., high-rate characteristic and cycle characteristic) can be improved.

The precursor particles typically contain all the metal elements found in a lithium transition metal composite oxide (e.g., Li, Ni, Co, and Mn in the case of a lithium nickel cobalt manganese composite oxide). The precursor particles may further contain metal elements, such as Na, Mg, Ca, Al, Zn, and Sn, other than transition metals. The precursor particles may further contain a semimetal element such as B, Si, or P, a nonmetal element such as S, F, Cl, Br, or I, and other elements.

The precursor particles preferably further contain oxygen elements. For example, when the precursor particles are made of carbonates, they contain an oxygen element and a carbon element. The type of elements contained in the precursor particles can be confirmed by conventionally known methods (e.g., inductively coupled plasma (ICP) emission spectrometry).

In the precursor particles, an atomic ratio (Li element/TM element) of a lithium element to the transition metal element (in the case where a plurality of kinds of transition metal elements is included, the total atoms of them) is preferably 0.75 or more and 1.25 or less, more preferably 0.8 or more and 1.2 or less, and even more preferably 1.05 or more and 1.1 or less. Thus, in particular, the initial resistance of the lithium ion secondary battery can be suppressed to a lower level. It is noted that the atomic ratio of the lithium element to the transition metal element can be confirmed by conventionally known methods (e.g., the above-mentioned ICP emission spectrometry).

The precursor particles are typically in a powdered form. Each precursor particle typically has a substantially spherical shape. However, they may also be irregularly shaped. In the present specification, the term "substantially spherical" refers to a shape that can be considered generally spherical as a whole. This shape exhibits an average aspect ratio (major axis/minor axis) based on a cross-sectional electron microscope image, which is generally 1 to 2, preferably 1 to 1.5, and more preferably 1 to 1.2.

The precursor particle is typically in the form of a secondary particle, which is the agglomeration of a plurality of primary particles by physical or chemical bonding force. However, the precursor particle may contain primary particles or be composed of primary particles. In the present specification, the term "primary particle" refers to the smallest unit of particles constituting the precursor particle, and specifically, it refers to the smallest unit as judged from its apparent geometric form.

The precursor particles are preferably amorphous. Thus, in particular, an increase in the resistance after repetitive charge and discharge of the lithium ion secondary battery can be suppressed, and its cycle characteristic can be improved. This is supposed to be because the amorphous state of the precursor particles eases rearrangement of transition metal elements in firing, so that a lithium transition metal composite oxide with a homogeneous composition (with less composition unevenness) can be obtained. However, the precursor particles may be crystal. It should be noted that in the case where the precursor particles are made of carbonate, the precursor particles are usually amorphous. On the other hand, in the case where the precursor particles are made of hydroxide, the precursor particles are usually crystal.

Whether the precursor particles are amorphous or not (crystallinity of the particles) can be confirmed by an X-ray diffraction (XRD) method. In detail, the crystallinity of the precursor particles can be confirmed by performing measurement on the precursor particles using the XRD method and observing the peak on a (003) plane of an R3m phase derived from a metal hydroxide in an X-ray diffraction spectrum. In the case where the precursor particles are amorphous, a halo pattern with a broad peak is observed in an X-ray diffraction spectrum. In contrast, in the case where the precursor particles are crystal, a sharp peak is observed on the (003) plane of the R3m phase.

The average particle diameter of the precursor particles is preferably 2 µm or more, more preferably 5 µm or more, and even more preferably 7 µm or more. It is preferably 20 µm or less, more preferably 15 µm or less, and even more preferably 10 µm or less. According to the inventor's knowledge, the average particle diameter of the precursor particles can affect the properties of the lithium transition metal composite oxide obtained by firing, and can in turn significantly affect the battery characteristics. As described in test examples mentioned later, by setting the average particle diameter of the precursor particles within the above range, it becomes easier to form suitable conductive paths in the positive electrode (in detail, between lithium transition metal composite oxide particles), thus making it possible to improve the battery characteristics (e.g., high-rate characteristic and cycle characteristic). In the present specification, the term "average particle diameter" refers to the median diameter (D₅₀ particle diameter), which is the particle diameter corresponding to a cumulative frequency of 50 volume% from the side of fine particles with the smallest particle diameter in the volume-based particle size distribution based on the laser diffraction and scattering method. The average particle diameter of the precursor particles can be suitably adjusted, for example, by a reaction time of a crystallization step S2 in the manufacturing method mentioned later.

The tapped density of the precursor particles is preferably 1.5 g/cm³ or higher, more preferably 1.8 g/cm³ or higher, and even more preferably 2.0 g/cm³ or higher. It is preferably 2.8 g/cm³ or lower, and more preferably 2.5 g/cm³ or lower. According to the inventor's findings, the tapped density of the precursor particles can affect the properties of the lithium transition metal composite oxide obtained by firing and thus can in turn significantly affect the battery characteristics. As described in the test examples below, by setting the tapped density of the precursor particles within the above range, the positive electrode is appropriately made finer, leading to a higher filling rate. As a result, this can facilitate the formation of suitable conductive paths in the positive electrode and improve the battery characteristics (e.g., high-rate characteristic and cycle characteristic). In the present specification, the term "tapped density" refers to a value measured by using a tapping type density measuring device in accordance with JIS K1469:2003. The tapped density of the precursor particles can be suitably adjusted, for example, by the composition of an initial solution provided in an initial solution preparation step S1 of the manufacturing method described below as well as the concentration of ammonium ions in a reaction solution in the crystallization step S2.

### [Manufacturing method for precursor particles]

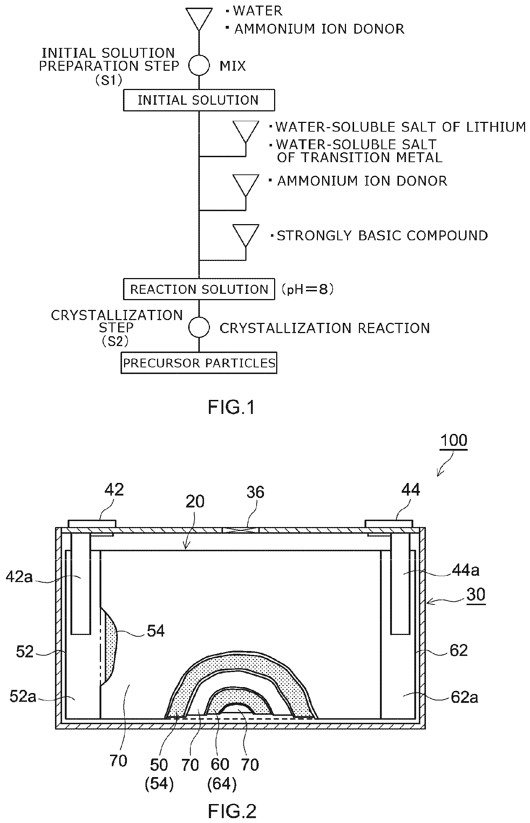

Next, a preferred example of the manufacturing method for the precursor particles described above will be described. FIG. 1 is a flowchart for explaining a manufacturing method for precursor particles according to one embodiment of the present disclosure. The manufacturing method for precursor particles according to this embodiment utilizes a coprecipitation method and includes, in this order, the initial solution preparation step S1 of preparing the initial solution and the crystallization step S2 of preparing the reaction solution and precipitating the precursor particles in the reaction solution. The manufacturing method disclosed herein may further include other steps at any stage.

The initial solution preparation step S1 is a step of preparing an initial solution containing at least water, for example, in a reaction tank. As water, from the viewpoint of preventing contamination of an impurity, ion-exchanged water, distilled water, ultrafilterd water, reverse osmosis water, and the like can be suitably used. The initial solution can function as a buffer solution to ease the crystallization reaction in the crystallization step S2 mentioned later. By conducting the crystallization reaction via the initial solution, it becomes easier to control the form of the resulting precursor particles, so that the precursor particles with the properties described above can be suitably manufactured. The initial solution may be composed of water only, or it may be a solution in which a solute is dispersed in water. However, it is preferable that the initial solution does not contain compounds that may cause any crystallization reactions, such as a strongly basic compound mentioned later, for example.

In this embodiment, the initial solution further contains an ammonium ion donor. The initial solution is typically an aqueous solution in which the ammonium ion donor is dissolved in water as a solvent. The inclusion of the ammonium ion donor (in detail, ammonium ions) in the initial solution can promote the formation or growth of nuclei and enhance adhesiveness or bonding between the primary particles in the crystallization step S2 mentioned later. Thus, the precursor particles can be made finer, so that the precursor particles with the above properties (especially satisfying the above tapped density range) can be suitably manufactured. In turn, the battery characteristics (e.g., high-rate characteristic) can be improved.

An ammonium ion donor aqueous solution may be prepared, for example, by purchasing a commercially available product (ammonia solution) or by mixing a solvent containing at least water and the ammonium ion donor at any ratio. For mixing, conventionally known stirring and mixing devices such as a magnetic stirrer, a planetary mixer, and a disperser can be used as appropriate. Examples of the ammonium ion donor that is usable as appropriate include ammonium sulfate, ammonium nitrate, ammonium hydroxide (NH₄OH), ammonium halide, and aqueous ammonia. These compounds may be used alone or in combination of two or more kinds. Among them, from the viewpoint of adjusting the pH of the initial solution to the neutral to acidic side, an acidic substance, e.g., ammonium sulfate, is preferable. Although not particularly limited, a concentration of ammonium ions in the initial solution is preferably 0.01 to 0.5 mol/L, more preferably 0.05 to 0.3 mol/L, and even more preferably 0.1 to 0.2 mol/L.

The solvent is typically water, but may be a water-based mixed solvent. As a solvent other than water that constitutes the mixed solvent, an organic solvent that can be homogeneously mixed with water, such as a lower alcohol and a lower ketone, can be used. In this case, the initial solution can be an aqueous solution.

In a preferred embodiment, the initial solution further contains a water-soluble salt of lithium and a water-soluble salt of a transition metal. The water-soluble salt of lithium serves as a lithium source (Li source) for the precursor particles, and the water-soluble salt of the transition metal serves as a transition metal source (TM source) for the precursor particles. These raw materials are typically the same as those used in the crystallization step S2. That is, parts of the Li source and the TM source are contained in the initial solution in advance. In the initial solution, the transition metal element (TM element) can form a complex with ammonium ions donated by the ammonium ion donor. By including the Li source and TM source in the initial solution in advance, the Li precipitation rate can be increased in the crystallization step S2 mentioned later. This can improve the Li recovery rate (ratio of the amount of precipitated Li to that of introduced Li) and thereby can enhance productivity. Also, since the amount of introduced Li can be reduced, excess anionic components derived from Li can be reduced, and the battery characteristics (e.g., high-rate characteristic and cycle characteristic) can be improved.

The pH of the initial solution is preferably adjusted to less than 8, and more preferably less than 7.5, and it should be adjusted to, for example, 5 to 7. The temperature environment of this step is preferably 10°C or higher, and more preferably 25°C or higher. On the other hand, for example, from the viewpoint of suppressing volatilization of ammonia, it is preferably 50°C or lower, and more preferably 35°C or lower.

The crystallization step S2 involves, for example, preparing a reaction solution by adding, in a reaction tank, a water-soluble salt of lithium, a water-soluble salt of a transition metal, an ammonium ion donor, and a strongly basic compound to the initial solution, which has been prepared in the initial solution preparation step S 1, and mixing them; and precipitating the precursor particles including lithium and the transition metal in the reaction solution. The order of addition of the water-soluble salt of lithium, the water-soluble salt of the transition metal, the ammonium ion donor, and the strongly basic compound is not particularly limited. For example, the water-soluble salt of lithium and the water-soluble salt of the transition metal may be mixed first to prepare a mixed solution, and then the mixed solution, the ammonium ion donor, and the strongly basic compound may be added to the initial solution substantially at the same time. For mixing, the above-mentioned conventionally known stirring and mixing devices can be used as appropriate.

By adding and mixing these raw materials, the crystallization reaction is caused in the reaction solution, so that the nuclei of precursor particles containing a Li element and a TM element can be precipitated. Furthermore, by continuing the crystallization reaction for a predetermined time, the precipitated nuclei grow, whereby the precursor particles with a desired particle diameter (typically, the secondary particle diameter) can be obtained.

The water-soluble salt of lithium serves as a Li source for the precursor particles as mentioned above. As the water-soluble salt of lithium, for example, water-soluble ionic compounds such as lithium halide (e.g., lithium chloride, etc.), lithium sulfate, and lithium nitrate can be used as appropriate. These compounds may be used alone or in combination of two or more kinds. Among these, from the viewpoint of reactivity or the like, lithium halide is preferable, and lithium chloride is more preferable because it can be derived from resources. The water-soluble salt of lithium may be in the hydrate state.

Although not particularly limited, the water-soluble salt of lithium is preferably added such that the concentration of lithium in the reaction solution is generally within the range of 0.1 to 2 mol/L. It is more preferably added such that the concentration of lithium is, for example, 0.4 to 1.0 mol/L, 1.0 to 1.4 mol/L, or 1.1 to 1.4 mol/L. This makes it possible to suitably manufacture the precursor particles with the above properties.

The water-soluble salt of the transition metal serves as the TM source for the precursor particles as described above. As the water-soluble salt of the transition metal, for example, sulfates, nitrates, and oxalates of the transition metal can be used as appropriate. These compounds may be used alone or in combination of two or more kinds. Among them, acidic substances, e.g., sulfates, are preferable. The water-soluble salt of the transition metal may be in the hydrate state. In the reaction solution, the transition metal element (TM element) can form a complex with ammonium ions donated from the ammonium ion donor in the initial solution.

Although not particularly limited, the water-soluble salt of the transition metal is preferably added such that the concentration of the transition metal in the reaction solution (in the case where a plurality of kinds of transition metals is included, the total concentration of them) is generally within the range of 0.1 to 0.5 mol/L. It is more preferably added such that the concentration of the transition metal is, for example, 0.1 to 0.3 mol/L, 0.1 to 0.29 mol/L, or 0.3 to 0.4 mol/L. Thus, the precursor particles with the above properties can be suitably manufactured.

Although not particularly limited, in the reaction solution, the molar ratio (Li/TM) of lithium to the transition metal (in the case where a plurality of kinds of transition metals is included, the total mole of them) is preferably 0.8 or more, more preferably 0.9 or more, and even more preferably 1 or more. Thus, the amount of lithium becomes sufficient, whereby the precursor particles that satisfy the above properties, for example, the above atomic ratio (Li element/TM element), can be suitably manufactured. The above molar ratio (Li/TM) is preferably 5 or less, more preferably 4 or less, even more preferably 3 or less, particularly preferably 2 or less, and even more preferably 1.7 or less, 1.5 or less, 1.3 or less, 1.2 or less, or 1.1 or less. This can suppress contamination of lithium salts in the precipitated precursor particles, thus improving the battery characteristics (e.g., high-rate characteristic and cycle characteristic). In addition, the amount of used Li can be reduced, and thus the Li recovery rate (ratio of the amount of precipitated Li to that of introduced Li) can be improved, thereby enhancing productivity. The molar ratio of the transition metal to Li is equal to the ratio of the molar concentration of the transition metal to Li.

As the ammonium ion donor, the compounds such as those exemplified in the initial solution preparation step S1 can be used as appropriate, but it is preferable that the same compounds as those used in the initial solution preparation step S1 are used. For example, in the case where ammonium sulfate is used in the initial solution preparation step S1, ammonium sulfate is also preferably used in this step.

Although not particularly limited, the ammonium ion donor is preferably added such that the concentration of ammonium ions (NH₄⁺) in the reaction solution is about 0.1 to 1.5 mol/L. It is more preferably added such that the concentration of ammonium ions is 0.2 to 1.2 mol/L, and even more preferably added such that the concentration thereof is 0.3 to 1.1 mol/L. This can suitably form a complex of the transition metal element in the reaction solution, so that the precursor particles with the above properties (in particular, satisfying the above tap density range) can be suitably manufactured as described in the test examples below. In turn, the battery characteristics (e.g., high-rate characteristic and cycle characteristic) can be improved. The concentration of ammonium ions is preferably 0.45 mol/L or more, more preferably 0.6 mol/L or more, even more preferably 0.75 mol/L or more, and particularly preferably 0.9 mol/L or more.

The strongly basic compound is a component for precipitating a Li element and a transition metal element as nuclei, i.e., a compound having the function of forming a precipitate. For example, as the strongly basic compound, carbonates, hydroxides, sulfates, or the like of alkali metals or alkaline earth metals can be used as appropriate. These strongly basic compounds may be used alone or in combination of two or more kinds. Among them, carbonates of alkali metals or alkaline earth metals are preferable. Examples of carbonates include sodium carbonate, potassium carbonate, and calcium carbonate, and among them, sodium carbonate is preferable. According to the studies conducted by the inventors, the Li element is relatively more difficult to crystallize than the TM element, but by using a carbonate, the Li element can be suitably crystallized as Li₂CO₃. In addition, the Li element and the TM element are precipitated in a solution as carbonates, so that amorphous precursor particles can be obtained.

The strongly basic compound may be added all at one time, but it is preferably added gradually dropwise so as to prevent a sudden change in the pH of the reaction solution. The strongly basic compound is preferably added to make the pH of the solution exhibit alkaline properties. Specifically, it is preferably added such that the pH is 7.5 or higher, for example, within the range of 7.5 to 10, even 8 to 9. In this case, the concentration of the strongly basic compound in the solution can be, for example, 1 to 10 mol/L, and preferably about 3 to 7 mol/L. During the crystallization reaction, the pH of the reaction solution is preferably maintained substantially at a constant level (within the range of about ±0.5).

It is noted that the reaction solution may be composed of water, the water-soluble salt of lithium, the water-soluble salt of the transition metal, the ammonium ion donor, and the strongly basic compound, or it may further contain other compounds. Examples of components that may be contained in the reaction solution include semimetal elements (e.g., B, Si, P, etc.) and nonmetal elements (e.g., S, F, Cl, Br, I, etc.) that may be contained in the precursor particles.

The reaction temperature of this step is preferably 10°C or higher, more preferably 25°C or higher, for example, from the viewpoint of solubility of a raw material used and promotion of the formation of nuclei. On the other hand, for example, from the viewpoint of suppressing volatilization of ammonia, it is preferably 50°C or lower, and more preferably 35°C or lower.

The reaction time of this step is not particularly limited because it can vary depending on, for example, the concentration of ammonium ions in the reaction solution and the reaction temperature, but it is generally preferably 1 to 50 hours, and more preferably 5 to 40 hours. As described in the test examples below, this can suitably manufacture the precursor particles with the above properties (in particular, satisfying the above average particle diameter range). In turn, the battery characteristics (e.g., high-rate characteristic and cycle characteristic) can be improved. The reaction time may be, for example, 10 hours or more, or 15 hours or more. The reaction time is preferably 30 hours or less, for example, and more preferably 20 hours or less from the viewpoint of work efficiency and productivity.

In this step, it is preferable to irradiate the reaction solution with ultrasonic waves from the viewpoint of promoting the crystallization reaction (in particular, the formation of nuclei). As described in the test examples mentioned later, this can improve the Li recovery rate (the ratio of the amount of precipitated Li to that of introduced Li) and also enhance productivity. In addition, agglomeration of particles can be suppressed, which makes it easier to obtain the precursor particles with the above properties (in particular, satisfying the above average particle diameter range). As for the ultrasonic irradiation method, the reaction tank itself may be vibrated with ultrasonic waves, or an ultrasonic vibration probe may be inserted into the reaction tank (in the reaction solution). The conditions for ultrasonic vibration can be set as appropriate according to, for example, the composition of the reaction solution and the size of the reaction tank, but the frequency of the vibration should be set to about 5 to 100 kHz, 10 to 50 kHz, or 10 to 30 kHz, and its output should be set to about 10 to 500 W, 50 to 100 W, or 100 to 200 W.

When a carbonate of an alkali metal or alkaline earth metal is used as the strongly basic compound, this step is preferably performed under a CO₂ atmosphere, and all processes from the initial solution preparation step S1 to the crystallization step S2 (this step) are more preferably performed under a CO₂ atmosphere. This promotes the crystallization reaction (in particular, the formation of nuclei) and actively forms a carbonate of lithium (Li₂CO₃), as described in the test examples below. Therefore, the Li element, which is difficult to crystallize, can be suitably crystallized as a carbonate. However, the processes from the initial solution preparation step S 1 to the crystallization step S2 (this step) may be performed under an inert gas atmosphere such as nitrogen (N₂) or argon (Ar).

The crystallization reaction can produce the precursor particles as the precipitate. The precipitate can be collected by known methods. For example, the precipitate can be collected by a solid-liquid separation method such as filtration, then washed with, for example, water, and dried to obtain the precursor particles.

### [Manufacturing method for lithium transition metal composite oxide]

The precursor particles according to this embodiment can be converted to a lithium transition metal composite oxide by firing. That is, according to the technology disclosed herein, the manufacturing method for a lithium transition metal composite oxide, including a firing step of firing the precursor particles, is provided. This lithium transition metal composite oxide can be suitably used as a positive electrode active material of a lithium ion secondary battery.

In manufacturing methods for a positive electrode active material generally employed in the prior art, a lithium source is mixed with a carbonate composite (precursor) that does not contain lithium and contains a transition metal, and the mixture is fired, as described in, for example, Japanese Patent Application Publication No. 2021-136096. In contrast, since the precursor particles of this embodiment contain a Li element in addition to the TM element, it is not necessary to add a Li salt when the precursor particles according to this embodiment are used. Therefore, the positive electrode active material can be manufactured easily, and the productivity of the positive electrode active material can be improved.

Firing can be performed in a conventionally known firing furnace. The firing temperature is not particularly limited, but should be, for example, about 600°C or higher and 1000 °C or lower. The firing time is generally 1 hour or more, for example, 1 hour or more and 48 hours or less, preferably 5 hours or more and 24 hours or less. The firing atmosphere is preferably an oxygen-containing atmosphere, for example, an oxygen atmosphere or atmospheric atmosphere from the viewpoint of enhancing the crystallinity of the resulting oxide. The oxygen concentration in the oxygen-containing atmosphere is preferably 10 vol% or more, and more preferably 18 vol% or more and 100 vol% or less.

### [Lithium ion secondary battery]

A lithium ion secondary battery using the lithium transition metal composite oxide obtained by the firing has improved initial capacity. Preferably, it has lower initial resistance and smaller post-cycle resistance increase rate and exhibits excellent high-rate and cycle characteristics. Specific configuration examples of a lithium ion secondary battery will be described below with reference to the drawings.

FIG. 2 is a cross-sectional view schematically illustrating a structure of a lithium ion secondary battery 100 that uses a fired product of the precursor particles according to the embodiment. The lithium ion secondary battery 100 illustrated in FIG. 2 is a sealed battery configured by housing a flat wound electrode body 20 and a nonaqueous electrolyte (not shown) in a flat square battery case (i.e., outer container) 30. The battery case 30 includes a positive electrode terminal 42 and a negative electrode terminal 44 for external connection, and a thin safety valve 36 configured such that when the internal pressure of the battery case 30 increases to a predetermined level or more, the safety valve 36 releases the internal pressure. The positive and negative electrode terminals 42 and 44 are electrically connected to positive and negative electrode current collector plates 42a and 44a, respectively. A material for the battery case 30 is, for example, a metal material that is lightweight and has high thermal conductivity, such as aluminum.

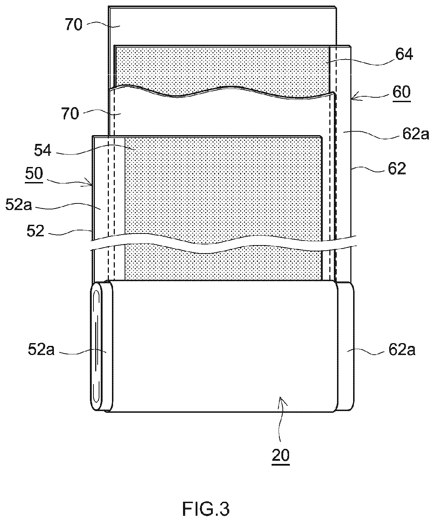

FIG. 3 is a schematic exploded diagram illustrating the structure of the wound electrode body 20. As illustrated in FIGS. 2 and 3, in the wound electrode body 20, a positive electrode sheet 50 and a negative electrode sheet 60 are stacked with two long separator sheets 70 interposed therebetween and are wound in the longitudinal direction. In the positive electrode sheet 50, a positive electrode active material layer 54 is formed on one or each (each in this example) surface of a long positive electrode current collector 52 along the longitudinal direction. In the negative electrode sheet 60, a negative electrode active material layer 64 is formed on one or each (each in this example) surface of a long negative electrode current collector 62 along the longitudinal direction. The positive electrode active material layer non-formed portion 52a (i.e., a portion where no positive electrode active material layer 54 is formed and the positive electrode current collector 52 is exposed) and a negative electrode active material layer non-formed portion 62a (i.e., a portion where no negative electrode active material layer 64 is formed and the negative electrode current collector 62 is exposed) extend off outward from both ends of the wound electrode body 20 in the winding axis direction (i.e., sheet width direction orthogonal to the longitudinal direction). The positive electrode current collector plate 42a and the negative electrode current collector plate 44a are respectively joined to the positive electrode active material layer non-formed portion 52a and the negative electrode active material layer non-formed portion 62a, respectively.

Examples of the positive electrode current collector 52 constituting the positive electrode sheet 50 include aluminum foil. The positive electrode active material layer 54 includes, as the positive electrode active material, at least a lithium transition metal composite oxide which is a fired product of the precursor particles according to this embodiment described above. The positive electrode active material layer 54 can further include a conductive material, a binder, and other materials. Examples of the conductive material that is suitably usable include carbon black such as acetylene black (AB) and other carbon materials (e.g., graphite). Examples of the binder that is usable include polyvinylidene fluoride (PVDF).

Examples of the negative electrode current collector 62 constituting the negative electrode sheet 60 include copper foil. The negative electrode active material layer 64 includes a negative electrode active material. Examples of the negative electrode active material that is usable include carbon materials such as graphite, hard carbon, and soft carbon. The negative electrode active material layer 64 can further include a binder, a thickener, and other materials. Examples of the binder that is usable include styrene-butadiene rubber (SBR). Examples of the thickener that is usable include carboxymethyl cellulose (CMC).

As the separator 70, various porous sheets that are the same as or similar to those conventionally used for lithium ion secondary batteries can be used, and examples thereof include porous resin sheets made of resins such as polyethylene (PE) and polypropylene (PP). The porous resin sheet may have a single-layer structure or a two or more layered structure (e.g., three-layer structure in which PP layers are stacked on both surfaces of a PE layer). The separator 70 may include a heat-resistant layer (HRL).

The nonaqueous electrolyte may be the same as or similar to that used for a conventional lithium ion secondary battery, and is typically one in which a supporting electrolyte is contained in an organic solvent (nonaqueous solvent). Examples of the nonaqueous solvent include aprotic solvents such as carbonates, esters, and ethers. Among them, carbonates are preferable because of an especially enhanced effect of reducing low-temperature resistance by a positive electrode material. Examples of the carbonates include ethylene carbonate (EC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), and trifluorodimethyl carbonate (TFDMC). Such nonaqueous solvents may be used alone or two or more of them may be used in combination. Examples of the supporting electrolyte that is suitably usable include lithium salts such as LiPF₆, LiBF₄, and lithium bis(fluorosulfonyl)imide (LiFSI). The concentration of the supporting electrolyte is preferably 0.7 mol/L or more and 1.3 mol/L or less.

The nonaqueous electrolyte can include components other than the nonaqueous electrolyte and the supporting electrolyte described above, for example, various additives exemplified by a gas generating agent, a film forming agent, a disperser, and a thickener, as long as the effects of the present disclosure are not significantly impaired.

Such a lithium ion secondary battery 100 can be manufactured by the manufacturing method, which includes a positive electrode production step of producing the positive electrode sheet 50 by using the lithium transition metal composite oxide manufactured by the above-mentioned manufacturing method.

The foregoing description has been directed to the square lithium ion secondary battery including the flat wound electrode body as a preferred example. However, the lithium transition metal composite oxide that is a fired product of the precursor particles according to this embodiment is also applicable to other types of lithium ion secondary batteries according to known methods. For example, the lithium transition metal composite oxide that is a fired product of the precursor particles according to this embodiment may be used to constitute a lithium ion secondary battery including a stacked-type electrode body (i.e., electrode body in which a plurality of positive electrodes and a plurality of negative electrodes are alternately stacked). The lithium transition metal composite oxide that is a fired product of the precursor particles according to this embodiment may also be used to constitute a cylindrical lithium ion secondary battery, a coin type lithium ion secondary battery, or a laminate-cased lithium ion secondary battery, for example. Further, it can also constitute an all-solid-state secondary battery with a solid electrolyte.

The lithium ion secondary battery 100 is applicable to various applications. Examples of desired applications include drive power supplies to be mounted on vehicles such as battery electric vehicles (BEVs), hybrid electric vehicles (HEVs), and plug-in hybrid electric vehicles (PHEVs). The lithium ion secondary battery 100 can be used as a storage battery for a small-sized power storage device, for example. The lithium ion secondary battery 100 can be used in a battery pack in which a plurality of batteries are typically connected in series and/or in parallel.

Examples of the present disclosure will now be described, but they are not intended to limit the present disclosure to these examples.

### «Test Example 1»

### <Production of Precursor Particles (Comparative Examples 1, 2, and Examples 2 to 12)

### [Comparative Example 1]

In Comparative Example 1, precursor particles were obtained by mixing raw materials at one time without preparing an initial solution. Specifically, first, under a N₂ atmosphere, 2.4 mol/L of lithium chloride (LiCl) as a Li source, 1.4 mol/L of a transition metal sulfate hydrate as a TM source, 0.7 mol/L of ammonium hydroxide (NH₄OH) as an ammonium ion donor, and 5.1 mol/L of sodium carbonate (Na₂CO₃) as the strongly basic compound were added into a reaction tank to prepare a reaction solution, and the reaction solution was then subj ected to a crystallization reaction for 5 hours. Solid-liquid separation was then performed, and the precipitate was taken out. The precipitate was washed by being immersed in ion-exchanged water, and solid-liquid separation was performed again to collect the precipitate. The collected precipitate was dried to obtain the precursor particles of Comparative Example 1.

### [Comparative Example 2]

In Comparative Example 2, precursor particles were obtained without preparing an initial solution and without using an ammonium ion donor. Specifically, under an N₂ atmosphere, first, 6.0 mol/L of lithium chloride (LiCl) aqueous solution and 1.5 mol/L of transition metal sulfate aqueous solution were added and mixed in the reaction tank at a liquid amount ratio of 1:2.3. To the mixed solution, sodium carbonate (Na₂CO₃) was added dropwise so as to achieve a pH of 8, thereby preparing a reaction solution. Subsequently, the reaction solution was then subj ected to a crystallization reaction for 10 hours. Thereafter, the precipitate was collected in the same manner as in Comparative Example 1 to obtain the precursor particles of Comparative Example 2.

### [Example 1]

In Example 1, 0.1 mol/L of ammonium sulfate ((NH₄)₂SO₄) aqueous solution was first prepared as an initial solution in a reaction tank under an N₂ atmosphere. To this initial solution, 6.0 mol/L of lithium chloride (LiCl) aqueous solution and 1.5 mol/L of transition metal sulfate aqueous solution were added at a liquid amount ratio of 1 : 1.2. Furthermore, 5.8 mol/L of ammonium sulfate ((NH₄)₂SO₄) aqueous solution was added to the mixed solution in the same liquid amount as that of the transition metal sulfate aqueous solution (i.e., such that the concentration of ammonium ions (NH₄⁺) was 0.3 mol/L), and sodium carbonate (Na₂CO₃) was added dropwise to achieve a pH of 8, whereby a reaction solution was prepared. Subsequently, the reaction solution was subj ected to a crystallization reaction for 50 hours. Thereafter, the precipitate was then collected in the same manner as in Comparative Example 1 to obtain precursor particles of Example 1.

### [Examples 2 to 12]

In Example 2, precursor particles were obtained in the same manner as in Example 1 except that an ammonium sulfate aqueous solution was added in an amount 4.0 times that of the transition metal sulfate aqueous solution (i.e., such that the concentration of ammonium ions (NH₄⁺) was 1.2 mol/L), and the reaction time was set to 20 hours. In Example 3, precursor particles were obtained in the same manner as in Example 1 except that the reaction time was set to 10 hours. In Example 4, precursor particles were obtained in the same manner as in Example 1 except that the reaction time was set to 5 hours. In Example 5, precursor particles were obtained in the same manner as in Example 1 except that an ammonium sulfate aqueous solution was added in an amount 1.5 times that of the transition metal sulfate aqueous solution (i.e., such that the concentration of ammonium ions (NH₄⁺) was 0.45 mol/L), and that the reaction time was set to 5 hours.

In Example 6, precursor particles were obtained in the same manner as in Example 1 except that an ammonium sulfate aqueous solution was added in an amount 1.5 times that of the transition metal sulfate aqueous solution (i.e., such that the concentration of ammonium ions (NH₄⁺) was 0.45 mol/L), and that the reaction time was set to 10 hours. In Example 7, precursor particles were obtained in the same manner as in Example 1 except that an ammonium sulfate aqueous solution was added in an amount 2 times that of the transition metal sulfate aqueous solution (i.e., such that the concentration of ammonium ions (NH₄⁺) was 0.6 mol/L), and that the reaction time was set to 15 hours. In Example 8, precursor particles were obtained in the same manner as in Example 1 except that an ammonium sulfate aqueous solution was added in an amount 2.5 times that of the transition metal sulfate aqueous solution (i.e., such that the concentration of ammonium ions (NH₄⁺) was 0.75 mol/L), and that the reaction time was set to 20 hours. In Example 9, precursor particles were obtained in the same manner as in Example 1 except that an ammonium sulfate aqueous solution was added in an amount 3 times that of the transition metal sulfate aqueous solution (i.e., such that the concentration of ammonium ions (NH₄⁺) was 0.9 mol/L), and that the reaction time was set to 30 hours.

In Example 10, precursor particles were obtained in the same manner as in Example 1 except that an ammonium sulfate aqueous solution was added in an amount 3.5 times that of the transition metal sulfate aqueous solution (i.e., such that the concentration of ammonium ions (NH₄⁺) was 1.05 mol/L), and that the reaction time was set to 40 hours. In Example 11, precursor particles were obtained in the same manner as in Example 1 except that an ammonium sulfate aqueous solution was added in an amount 3.5 times that of the transition metal sulfate aqueous solution (i.e., such that the concentration of ammonium ions (NH₄⁺) was 1.05 mol/L), and that the reaction time was set to 20 hours. In Example 12, precursor particles were obtained in the same manner as in Example 3 except that an initial solution consisted only of water (i.e., no ammonium ion donor was added to the initial solution). The outline of the synthesis conditions is shown in Table 1.

### <Measurement of Properties of Precursor Particles>

- Average particle diameter: the volume-based particle size distribution of the precursor particles was measured using a commercially available laser diffraction and scattering particle size distribution measuring device, and the particle diameter corresponding to a cumulative frequency of 50 volume% from the side of fine particles with the smallest particle diameter was determined as the average particle diameter (D₅₀). The results are shown in Table 1.
- Tapped density: the tapped density of the precursor particles was measured using a commercially available tapping type density measuring device in accordance with JIS K1469:2003. The results are shown in Table 1.

### <Li Recovery Rate>

The Li recovery rate was calculated by dividing the amount of precipitated Li (amount recovered as the precursor particles) by the amount of introduced Li. The results are shown in Table 1.

### <Production of Evaluation Lithium Ion Secondary Battery>

The precursor particles of each example was fired under an oxygen-containing atmosphere at 850°C for 10 hours, thereby obtaining a lithium transition metal composite oxide. The obtained lithium transition metal composite oxide (positive electrode active material), acetylene black (AB) as a conductive material, and polyvinylidene fluoride (PVDF) as a binder were mixed at a mass ratio of positive electrode active material : AB : PVDF = 85 : 10 : 5 in N-methylpyrrolidone (NMP), thereby preparing a paste for forming a positive electrode active material layer. This paste was applied onto aluminum foil with a thickness of 15 µm and dried, thereby producing a positive electrode sheet.

Natural graphite (C) as a negative electrode active material, styrene-butadiene rubber (SBR) as a binder, and carboxymethyl cellulose (CMC) as a thickener were mixed at a mass ratio of C : SBR : CMC = 98 : 1 : 1 in ion-exchanged water, thereby preparing a paste for forming a negative electrode active material layer. This paste was applied onto copper foil with a thickness of 10 µm and dried, thereby producing a negative electrode sheet.

As a separator sheet, a porous polyolefin sheet with a thickness of 20 µm having a three-layer structure of PP/PE/PP was prepared.

The positive electrode sheet, the negative electrode sheet, and the separator sheet were stacked with electrode terminals attached thereto. These components were housed in a laminated case. Subsequently, a nonaqueous electrolyte was poured in the laminated case, and the laminated case was hermetically sealed. As the nonaqueous electrolyte, one in which LiPF₆ as a supporting electrolyte was dissolved at a concentration of 1.0 mol/L in a mixed solvent which included ethylene carbonate (EC), dimethyl carbonate (DMC), and ethyl methyl carbonate (EMC) at a volume ratio of 3 : 4 : 3 was used. In the manner described above, evaluation lithium ion secondary batteries of the respective examples were obtained.

### <Initial Capacity Measurement>

Each evaluation lithium ion secondary battery was charged at a constant current to 4.1 V at a charge rate of 1 C, and then discharged at a constant current to 3.0 V at a discharge rate of 0.2 C. The discharge capacity at this time was calculated as the initial capacity. The ratio of the initial capacity of each of the other evaluation lithium ion secondary batteries other than that of Comparative Example 1 was then determined, assuming that the initial capacity of the evaluation lithium ion secondary battery of Comparative Example 1 was 100. The results are shown in Table 1.

### <Initial Resistance Measurement>

Each evaluation lithium ion secondary battery was adjusted to have a state of charge (SOC) of 50%, and then placed under an environment of 25°C. Discharging was performed for 10 seconds with a current value of 100 mA, and a voltage drop ΔV was determined. Such a voltage drop ΔV was divided by the discharge current value (100mA) to calculate the battery resistance, which was defined as the initial resistance. Then, the ratio of the initial resistance of each of the evaluation lithium ion secondary batteries other than that of Comparative Example 1 was determined assuming that an initial resistance of the evaluation lithium ion secondary battery of Comparative Example 1 was 200.
The results are shown in Table 1.

### <Evaluation of Post-Cycle Resistance Increase Rate>

Each evaluation lithium ion secondary battery was placed in an environment of 60°C and then subjected to 200 cycles of repeated charging and discharging, each cycle consisting of constant-current charging to 4.1 V at a charge rate of 1 C and constant-current discharging to 3.0 V at a discharge rate of 1 C. Next, in the same manner as the initial resistance measurement, a battery resistance after 200 cycles was determined. From the formula of (battery resistance after 200 cycles/ initial resistance) × 100, a post-cycle resistance increase rate (%) was determined. The results are shown in Table 1.

**[Table 1]**

| | ATMOSPHERE | INITIAL SOLUTION | REACTION SOLUTION | | | | | | | | | PRECURSOR PARTICLES | | PRODUCTIVITY | INITIAL PROPERTIES | | ENDURANCE PROPERTIES |
|---|---|---|---|---|---|---|---|---|---|---|---|---|---|---|---|---|---|
| | | (NH₄)₂SO₄ AQUEOUS SOLUTION | LiCl AQUEOUS SOLUTION | AQUEOUS SOLUTION OF TRANSITION METAL SULFATE | NH₄OH AQUEOUS SOLUTION | Na₂CO₃ AQUEOUS SOLUTION | (NH₄)₂SO₄ AQUEOUS SOLUTION | DROPPED LIQUID AMOUNT | NH4+ CONCENTRATION (mol/L) | PH STRONGLY BASIC COMPOUND | REACTION TIME | D₅₀ PARTICLE DIAMETER (*µ*m) | TAPPED DENSITY (g/cm³) | Li RECOVERY RATE (%) 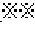 | INITIAL CAPACITY (RELATIVE VALUE) | INITIAL RESISTANCE (RELATIVE VALUE) | POST-CYCLE RESISTANCE INCREASE RATE (%) |
| COMPARATIVE EXAMPLE 1 | N₂ | NONE | 2.4mol/L | 1.4mol/L | 0.7mol/L | 5.1mol/L | - | - | - | - | 5h | 2 | 1.0 | 61 | 100 | 200 | 300 |
| COMPARATIVE EXAMPLE 2 | N₂ | NONE | 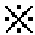 1 | | - | - | - | - | - | 8 DROPPING OF Na₂CO₃ | 10h | 5 | 0.5 | 61 | 88 | 180 | 250 |
| EXAMPLE 1 | N₂ | 0.1mol/L | 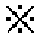 2 | | - | - | 5.8mol/L | SAME LIQUID AMOUNT | 0.3 | 8 DROPPING OF Na₂CO₃ | 50h | 25 | 1.5 | 30 | 113 | 220 | 150 |
| EXAMPLE 2 | N₂ | 0.1mol/L | 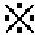 2 | | - | - | 5.8mol/L | 4.0 TIMES | 1.2 | 8 DROPPING OF Na₂CO₃ | 20h | 10 | 3.0 | 30 | 130 | 220 | 150 |
| EXAMPLE 3 | N₂ | 0.1mol/L | 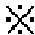 2 | | - | - | 5.8mol/L | SAME LIQUID AMOUNT | 0.3 | 8 DROPPING OF Na₂CO₃ | 10h | 5 | 1.5 | 30 | 113 | 150 | 200 |
| EXAMPLE 4 | N₂ | 0.1mol/L | 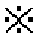 2 | | - | - | 5.8mol/L | SAME LIQUID AMOUNT | 0.3 | 8 DROPPING OF Na₂CO₃ | 5h | 2 | 1.8 | 30 | 120 | 130 | 180 |
| EXAMPLE 5 | N₂ | 0.1mol/L | 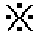 2 | | - | - | 5.8mol/L | 1.5 TIMES | 0.45 | 8 DROPPING OF Na₂CO₃ | 5h | 2 | 2.0 | 30 | 125 | 100 | 150 |
| EXAMPLE 6 | N₂ | 0.1mol/L | 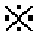 2 | | - | - | 5.8mol/L | 1.5 TIMES | 0.45 | 8 DROPPING OF Na₂CO₃ | 10h | 5 | 2.0 | 30 | 125 | 100 | 140 |
| EXAMPLE 7 | N₂ | 0.1mol/L | 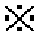 2 | | - | - | 5.8mol/L | 2 TIMES | 0.6 | 8 DROPPING OF Na₂CO₃ | 15h | 7 | 2.0 | 30 | 125 | 95 | 130 |
| EXAMPLE 8 | N₂ | 0.1mol/L | 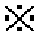 2 | | - | - | 5.8mol/L | 2.5 TIMES | 0.75 | 8 DROPPING OF Na₂CO₃ | 20h | 10 | 2.0 | 30 | 125 | 95 | 126 |
| EXAMPLE 9 | N₂ | 0.1mol/L | 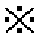 2 | | - | - | 5.8mol/L | 3 TIMES | 0.9 | 8 DROPPING OF Na₂CO₃ | 30h | 15 | 2.0 | 30 | 125 | 96 | 120 |
| EXAMPLE 10 | N₂ | 0.1mol/L | 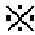 2 | | - | - | 5.8mol/L | 3.5 TIMES | 1.1 | 8 DROPPING OF Na₂CO₃ | 40h | 20 | 2.0 | 30 | 125 | 97 | 116 |
| EXAMPLE 11 | N₂ | 0.1mol/L | 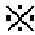 2 | | - | - | 5.8mol/L | 3.5 TIMES | 1.1 | 8 DROPPING OF Na₂CO₃ | 20h | 10 | 2.8 | 30 | 145 | 97 | 124 |
| EXAMPLE 12 | N₂ | ONLY WATER | 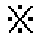 2 | | - | - | 5.8mol/L | SAME LIQUID AMOUNT | 0.3 | 8 DROPPING OF Na₂CO₃ | 10h | 5 | 1.4 | 30 | 112 | 210 | 160 |

| | | | | | | | | | | | | | | | | | |
|---|---|---|---|---|---|---|---|---|---|---|---|---|---|---|---|---|---|
| 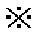 1 :A 6.0 MOL/L AQUEOUS SOLUTION OF LiCl AND A 1.5 MOL/L AQUEOUS SOLUTION OF TRANSITION METAL SULFATE WERE MIXED AT 1 : 2.3. 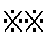 :Li PRECIPITATED AMOUNT/Li INTRODUCED AMOUNT 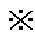 2:A 6.0 MOL/L AQUEOUS SOLUTION OF LiCl AND A 1.5 MOL/L AQUEOUS SOLUTION OF TRANSITION METAL SULFATE WERE MIXED AT 1 : 1.2 | | | | | | | | | | | | | | | | | |

.

As can be seen from the results of Table 1, the initial capacities were relatively low in Comparative Example 1 where the initial solution was not prepared and the raw materials were mixed together all at one time or in Comparative Example 2 where the initial solution was not prepared and no ammonium ion donor was used in the crystallization step. In contrast to these comparative examples, in Examples 1 to 12 where the initial solution containing at least water was prepared and an ammonium ion donor was added in addition to a strongly basic compound in the crystallization step, the initial capacity was relatively high, and the energy density was high. Such results demonstrate the technical significance of the present disclosure disclosed herein.

Furthermore, in Examples 3 to 12 where the concentration of ammonium ions (NH₄⁺) in the reaction solution was set to 0.3 to 1.1 mol/L and the reaction time was set to 5 to 40 hours in the crystallization step, the initial resistance was relatively low, and the high-rate characteristic was excellent. In particular, by increasing the concentration of the above ammonium ions (NH₄⁺) to 0.45 mol/L or more, both the initial resistance and the post-cycle resistance increase rate were able to be reduced to less than or equal to half those of Comparative Example 1. In addition, by setting the concentration of ammonium ions (NH₄⁺) to 0.6 mol/L or more, or even 0.75 mol/L or more, the initial resistance and the post-cycle resistance increase rate were able to be further reduced. The comparison between Example 3 and Example 12 shows that the initial resistance was able to be reduced by including the ammonium ion donor in the initial solution.

### <<Test Example II>>

### <Production of Precursor Particles (Examples 13 to 17)>

In Examples 13 to 16, a water-soluble salt of lithium and a water-soluble salt of a transition metal were added to the initial solution. That is, in Example 13, the initial solution was prepared by first adding 0.1 mol/L of ammonium sulfate ((NH₄)₂SO₄) aqueous solution, 6.0 mol/L of lithium chloride (LiCl) aqueous solution, and 1.5 mol/L of transition metal sulfate aqueous solution at a liquid amount ratio of 6 : 1 : 2.4 in a reaction tank under a N₂ atmosphere. To this initial solution, 6.0 mol/L of lithium chloride (LiCl) aqueous solution and 1.5 mol/L of transition metal sulfate aqueous solution were added at a liquid amount ratio of 1:2.4. Further, 5.8 mol/L of ammonium sulfate ((NH₄)₂SO₄) aqueous solution was added in an amount 2.5 times that of the transition metal sulfate aqueous solution, and sodium carbonate (Na₂CO₃) was also added dropwise to achieve a pH of 8, thereby preparing a reaction solution. Subsequently, the reaction solution was subjected to a crystallization reaction for 20 hours. Thereafter, the precipitate was then collected in the same manner as in Comparative Example 1 to obtain precursor particles of Example 13.

In Example 14, precursor particles were obtained in the same manner as in Example 13 except that a mixing ratio of the lithium chloride aqueous solution to the transition metal sulfate aqueous solution was set to 1 : 3.2 in the initial solution and the reaction solution, and that the reaction was conducted under CO₂ atmosphere. In Example 15, precursor particles were obtained in the same manner as in Example 14 except that the mixing ratio of the lithium chloride aqueous solution to the transition metal sulfate aqueous solution was set to 1 : 3.5 in the initial solution and the reaction solution, and the ultrasonic vibration probe was inserted into the reaction solution, which was then continuously vibrated under the conditions of a frequency of 20 kHz and an output of 150W during the crystallization reaction. In Example 16, precursor particles were obtained in the same manner as in Example 13 except that the mixing ratio of the lithium chloride aqueous solution to the transition metal sulfate aqueous solution was set to 1 : 3.2 in the initial solution and the reaction solution, and the ultrasonic vibration probe was inserted into the reaction solution, which was then continuously vibrated under the conditions of a frequency of 20 kHz and an output of 150W during the crystallization reaction.

In Example 17, precursor particles were obtained in the same manner as in Example 6 of Test Example I except that the mixing ratio of the lithium chloride aqueous solution to the transition metal sulfate aqueous solution was set to 1 : 1.8 in the reaction solution, that the crystallization reaction was conducted under a CO₂ atmosphere, and that the ultrasonic vibration probe was inserted into the reaction solution, which was then continuously vibrated under the conditions of a frequency of 20 kHz and an output of 150W during the crystallization reaction. The outline of the synthesis conditions is shown in Table 2. Table 2 also shows Example 6 in Test Example I for comparison.

The properties (average particle diameter and tapped density) of the obtained precursor particles were measured, and the Li recovery rate was calculated in the same manner as in Test Example I. Furthermore, an evaluation lithium ion secondary battery of each example was produced, and the battery characteristics thereof were evaluated, in the same manner as in Test Example I. The results are shown in Table 2.

**[Table 2]**

| | ATMOSPHERE | INITIAI SOLUTION | | | | REACTION SOLUTION | | | | | | | | PRECURSOR PARTICLES | | PRODUCTIVITY | INITIAL PROPERTIES | | ENDURANCE PROPERTIES |
|---|---|---|---|---|---|---|---|---|---|---|---|---|---|---|---|---|---|---|---|
| | | (NH₄)₂SO₄ AQUEOUS SOLUTION | LiCl AQUEOUS SOLUTION | AQUEOUS SOLUTION OF TRANSITION METAL SULFATE | MIXING RATIO | LiCl AQUEOUS SOLUTION | AQUEOUS SOLUTION OF TRANSITION METAL SULFATE 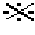 ² | (NH₄)₂SO₄ AQUEOUS SOLUTION | DROPPED LIQUID AMOUNT | NH₄⁺ CONCENTRATION (mol/L) | PH STRONGLY BASIC COMPOUND | REACTION TIME | ULTRASONIC WAVES | D₅₀ PARTICLE DIAMETER (*µ*m) | TAPPED DENSITY (g/cm³) | Li RECOVERY RATE(%) 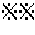 | INITIAL CAPACITY (RELATIVE VALUE) | INITIAL RESISTANCE (RELATIVE VALUE) | POST-CYCLE RESISTANCE INCREASE RATE (%) |
| Example 8 | N₂ | 0.1mol/L | - | - | - | MIXING RATIO: 1:1.2 | | 5.8mol/L | 2.5 TIMES | 0.75 | 8 DROPPING OF Na₂CO₃ | 20h | ABSENCE | 10 | 2.0 | 30 | 125 | 95 | 126 |
| Example 13 | N₂ | 0.1mol/L | 6.0mol/L | 1.5mol/L | 6:1:2.4 | MIXING RATIO: 1:2.4 | | 5.8mol/L | 2.5 TIMES | 0.75 | 8 DROPPING OF Na₂CO₃ | 20h | ABSENCE | 10 | 2.0 | 61 | 125 | 90 | 115 |
| Example 14 | CO₂ | 0.1mol/L | 6.0mol/L | 1.5mol/L | 8:1:3.2 | MIXING RATIO: 1:32 | | 5.8mol/L | 2.5 TIMES | 0.75 | 8 DROPPING OF Na₂CO₃ | 20h | ABSENCE | 10 | 2.0 | 81 | 125 | 85 | 110 |
| Example 15 | CO₂ | 0.1mol/L | 6.0mol/L | 1.5mol/L | 9:1:3.5 | MIXING RATIO: 1:3.5 | | 5.8mol/L | 2.5 TIMES | 0.75 | 8 DROPPING OF Na₂CO₃ | 20h | PRESENCE | 10 | 2.0 | 90 | 125 | 80 | 105 |
| EXAMPLE 16 | N₂ | 0.1mol/L | 6.0mol/L | 1.5mol/L | 8:1:3.2 | MIXING RATIO: 1:3.2 | | 5.8mol/L | 2.5 TIMES | 0.75 | 8 DROPPING OF Na₂CO₃ | 20h | PRESENCE | 10 | 2.0 | 81 | 125 | 85 | 110 |
| EXAMPLE 17 | CO₂ | 0.1mol/L | - | - | - | MIXING RATIO: 1:1.8 | | 5.8mol/L | 2.5 TIMES | 0.75 | 8 DROPPING OF Na₂CO₃ | 20h | PRESENCE | 10 | 2.8 | 45 | 145 | 87 | 114 |

| | | | | | | | | | | | | | | | | | | | |
|---|---|---|---|---|---|---|---|---|---|---|---|---|---|---|---|---|---|---|---|
| 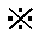 1: 6.0 MOL/L AQUEOUS SOLUTION OF LiCI 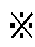 2: 1.5 MOL/L AQUEOUS SOLUTION OF TRANSITION METAL SULFATE 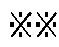 :Li PRECIPITATED AMOUNT/Li INTRODUCED AMOUNT | | | | | | | | | | | | | | | | | | | |

As shown in Table 2, in Example 13 where the lithium chloride aqueous solution and the transition metal sulfate aqueous solution were added to the initial solution, the initial resistance and the post-cycle resistance increase rate were relatively reduced, compared to Example 8 where these aqueous solutions were not added. This indicates that the inclusion of the water-soluble salt of lithium and the water-soluble salt of a transition metal in the initial solution can further improve the high-rate and cycle characteristics of the lithium ion secondary battery. Furthermore, the Li recovery rate was able to be increased to the value about twice that of Example 8.

In Example 14 where the crystallization reaction was conducted under a CO₂ atmosphere, the initial resistance and the post-cycle resistance increase rate were relatively reduced, compared to Example 13 where the crystallization reaction was conducted under an N₂ atmosphere. This indicates that using a carbonate as the strongly basic compound and performing the crystallization step under a CO₂ atmosphere can further improve the high-rate and cycle characteristics of the lithium ion secondary battery. Furthermore, the Li recovery rate was also able to be increased.

In Example 15 where the reaction solution was irradiated with ultrasonic waves under a CO₂ atmosphere during the crystallization reaction, the initial resistance and the post-cycle resistance increase rate were relatively reduced, compared to Example 14 where the reaction solution was not irradiated with ultrasonic waves under a CO₂ atmosphere. The comparison between Example 16 (with ultrasound waves) and Example 13 (without ultrasound waves) shows that the same trend was observed also in the case where the crystallization reaction was conducted under the N₂ atmosphere. This indicates that irradiating the reaction solution with ultrasonic waves during the crystallization reaction can further improve the high-rate and cycle characteristics of the lithium ion secondary battery, for example, regardless of the reaction atmosphere and the composition of the initial solution. Furthermore, the Li recovery rate was also able to be increased.

As described above, the specific aspects of the art disclosed herein are those described in the following respective items.
Item 1: A manufacturing method for precursor particles that include a lithium element and a transition metal element and are convertible to a lithium transition metal composite oxide by firing, the method including: an initial solution preparation step of preparing an initial solution including at least water; and a crystallization step of preparing a reaction solution by adding, to the initial solution, a water-soluble salt of lithium, a water-soluble salt of a transition metal, an ammonium ion donor, and a strongly basic compound, and precipitating the precursor particles including the lithium and the transition metal in the reaction solution. Item 2: The manufacturing method according to Item 1, wherein in the crystallization step, a concentration of ammonium ions in the reaction solution is 0.3 mol/L or more and 1.1 mol/L or less, and a reaction time is 5 hours or more and 40 hours or less.
Item 3: The manufacturing method according to Item 1 or 2, wherein the initial solution further includes an ammonium ion donor.
Item 4: The manufacturing method according to any one of Items 1 to 3, wherein the initial solution further includes a water-soluble salt of lithium and a water-soluble salt of the transition metal.
Item 5: The manufacturing method according to any one of Items 1 to 4, wherein the strongly basic compound is a carbonate of an alkali metal or alkaline earth metal.
Item 6: The manufacturing method according to Item 5, wherein at least the crystallization step is performed under a CO₂ atmosphere.
Item 7: The manufacturing method according to any one of Items 1 to 6, wherein in the crystallization step, the reaction solution is irradiated with ultrasonic waves.
Item 8: A manufacturing method for a lithium transition metal composite oxide, further including: a firing step of firing the precursor particles obtained by the manufacturing method according to any one of Items 1 to 7.
Item 9: A manufacturing method for a lithium ion secondary battery, including: a positive electrode production step of producing a positive electrode by using the lithium transition metal composite oxide obtained by the manufacturing method according to Item 8.

While specific examples of the present disclosure have been described above in detail, these are illustrative only, and do not limit the scope of the claims. The art recited in the claims include various modifications and alternations of the specific examples exemplified above.

### [Reference Signs List]

- 20: Wound electrode body
- 30: Battery case
- 42: Positive electrode
- 44: Negative electrode
- 50: Positive electrode sheet (positive electrode)
- 54: Positive electrode active material layer
- 60: Negative electrode sheet (negative electrode)
- 64: Negative electrode active material layer
- 100 L: ithium ion secondary battery

## Claims

1. A manufacturing method for precursor particles that include a lithium element and a transition metal element and are convertible to a lithium transition metal composite oxide by firing, the method comprising:
an initial solution preparation step (S1) of preparing an initial solution including at least water; and
a crystallization step (S2) of preparing a reaction solution by adding, to the initial solution, a water-soluble salt of lithium, a water-soluble salt of a transition metal, an ammonium ion donor, and a strongly basic compound, and precipitating the precursor particles including lithium and the transition metal in the reaction solution.

2. The manufacturing method according to claim 1, wherein
in the crystallization step (S2),
a concentration of ammonium ions in the reaction solution is 0.3 mol/L or more and 1.1 mol/L or less, and
a reaction time is 5 hours or more and 40 hours or less.

3. The manufacturing method according to claim 1 or 2, wherein the initial solution further includes an ammonium ion donor.

4. The manufacturing method according to claim 3, wherein the initial solution further includes a water-soluble salt of lithium and a water-soluble salt of the transition metal.

5. The manufacturing method according to any one of claims 1 to 4, wherein the strongly basic compound is a carbonate of an alkali metal or alkaline earth metal.

6. The manufacturing method according to claim 5, wherein at least the crystallization step (S2) is performed under a CO₂ atmosphere.

7. The manufacturing method according to any one of claims 1 to 6, wherein the reaction solution is irradiated with ultrasonic waves in the crystallization step (S2).

8. A manufacturing method for a lithium transition metal composite oxide, further comprising:
a firing step of firing the precursor particles obtained by the manufacturing method according to any one of claims 1 to 7.

9. A manufacturing method for a lithium ion secondary battery (100), comprising:
a positive electrode production step of producing a positive electrode (50) by using the lithium transition metal composite oxide obtained by the manufacturing method according to claim 8.
